# EUROPEAN PATENT SPECIFICATION

(11) **EP 2 054 137 B1**
(45) Date of publication and mention of the grant of the patent: **13.04.2011**
(21) Application number: 07789602.5
(22) Date of filing: 02.08.2007
(51) Int. Cl.: B01D 46/00, B01D 46/52, B01D 35/06

(54) **POLLUTANT FILTER FOR OFFICE EQUIPMENT**
SCHADSTOFFFILTER FÜR BÜROGERÄTE
FILTRE POUR MATÉRIEL DE BUREAU POLLUANT

(30) Priority: 03.08.2006 IT RM20060420
(43) Date of publication of application: 06.05.2009
(73) Proprietor: Eco Service Office S.r.l., 61100 Pesaro (IT)
(72) Inventor: SIMONCELLI, Gianfranco, I-61100 Pesaro (IT)
(74) Representative: Cinquantini, Bruno
(86) International application number: PCT/IB2007/002231
(87) International publication number: WO 2008/015559

(56) References cited:
- CA-A1- 2 212 515
- JP-A- 7 328 349
- US-A- 5 468 529

## Description

### Field of the Invention

The present invention refers to a filtering device to be applied to a container for housing office machines that use laserjet technology and it is designed to remove all dusts and gaseous pollutants such as ozone and other volatile organic compounds that are produced by office machines.

### Background art

Officers and printing shops use equipment such as laser printers and copiers, usually large and high capacity units placed in great number In the same working area. Copiers and laser printers In fact use tones, a powder form ink that can be released in the working environment together with other volatile organic compounds during normal operation, or during toner cartridge change, or again due to accidents, leakage etc.

These office machines also use powerful lamps that can reach heat of up to 180° C and therefore turn oxygen into ozone.

Phenomena connected with dusts referred to as lampblack consist of substances that form as a result of combustion or fission of specific materials such as toner components.

The same phenamenon was noticed during other working processes producing carbonic type particles, that because of their highly porous formation, released in the atmosphere other substances or chemical agents. Emissions of fine dusts such as lampblack, organic compounds and ozone within a closed working environment are both unpleasant and present serious health hazard for the persons who work there.

The use of large air extractors in working areas to obtain frequent air change is not always an adequate solution because staff that work or pass through that area are still subject to fine dusts and ozone emissions present in the environment as well as noise produced by air extractor motors and air moving along the ducts.

A limited cost and effective filtering system is preferable. JP-A 07328349 discloses a filter with a magnetic section constituded by clamping a permanent magnet between an upstream and a downstream side cotton-like filter layers in which are dispersed active carbon particles.

### Summary of the Invention

The present invention intends to provide a filtering device that offers a simple and effective solution to the problems above stated, a device that can be of practical use, easily adaptable to the machines. The filtering device is designed to abate all polluting elements that laserjet technology office machines like printers, telefax, copiers and MFCs produce.

The present invention consists of a filtering device with technical features as described in Claim 1; this filter lodged in a particular place along the extractor duct that sucks fumes produced by printers, copiers etc. retains all polluting agents particulates or gaseous. If necessary an additional suction unit shall be fitted in order to force air flow inside the hood through the filter while maintaining a slightly lower pressure inside the hood from where the extractor duct departs.

In this way any machine placed inside a close shell shaped container, that allows discharge of polluting substances only through the filtering device, is isolated from the surrounding environment removing all inconvenience and danger for the persons who work or stay there.

### Brief description of the Figures.

Further details of this invention shall be given in respect of the enclosed Tables where:

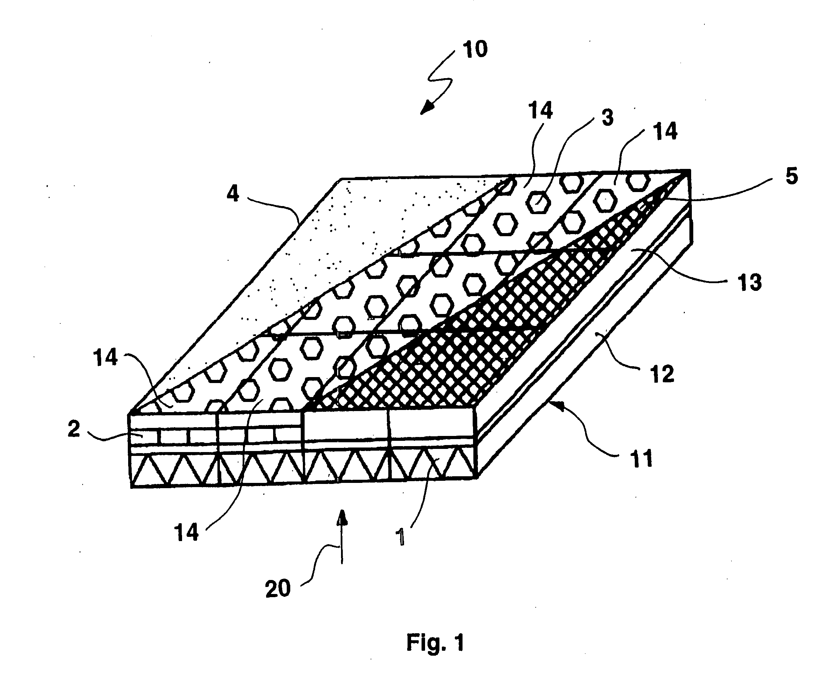

Fig. 1 shows the axonometric section plan of a filtering device;

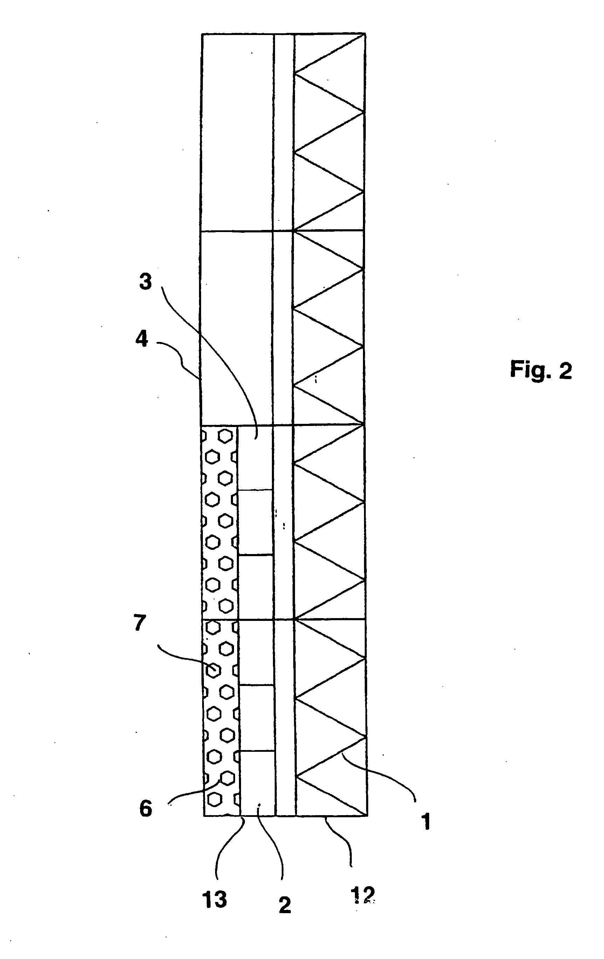

Fig. 2 shows the side view of the device shown in Fig.1

### Detailed description of a preferred embodiment of the invention

As shown in the Tables, the filtering device indicated as 10 consists of a parallelepipedon shaped container 11, simply referred to as box.

Box 11 is divided in two parts of a similar shape set abreast and referred to as semiboxes12 and 13. One or both semiboxes 12 and 13 consist of one or more sections or panels 14 having various square or alveolar shapes. A grid 5 made of various size meshes is placed between the two semiboxes 12 and 13 at surface front level; it is made of appropriate materials that ensure the required structural resistance and that retain all section contents while allowing the regular air flow meant to be filtered.

The first semibox 12, that shall be fitted upstream the duct taking into consideration the air flow direction indicated with the arrow 20, consists of a HEPA type paper filter 1, appropriately pleated like accordion folds, in order to increase the filtering surface and also the filtering capacity of the device. The weave of this filter is preferably chosen between h13 or h14 according to size of particles to be trapped. This semibox could also be made with no dividing sections if the filtering paper is made in a single piece.

The sections of the second semibox 13 are filled with neodymium magnetic elements placed in a way to ensure air passage between them.

This is carried out either by placing many magnets of small dimensions one beside the other so that a layer 2 of magnets 3 made of several spaces is formed or by using a single magnet with passages carved inside. Magnets 3 can be disk shaped, pierced at the centre or solid cylinder shaped. The optimum features of magnets 3 of this layer are preferably set between 3400<Br*C<3700, while remanence (Br)T is preferably set between 1.17 and 1.21.

Filtering elements made of activated carbon are inserted inside the sections of the second semibox 13; they are fitted in a layer that runs alongside that of the magnetic elements 3, are of a cylindrical shape and are set abreast with their respective axes running parallel. Activated carbon elements also contain a high percentage of ferrite 7.

The function of these tiny size ferrite elements 7 is that of becoming magnetized either through contact with or proximity to the magnets set in the adjacent layer and also that of increasing the filtering capacity of the device of this invention.

On the side farther apart from that of the contact with the first semibox, the second semibox is wrapped in HEPA type filtering paper 4 with meshes larger than those of the filter 1.

Inside the ducts that convey polluted or unwanted particles to be removed, the filter position has been set in such a way that, following the flow direction, the air crosses first the paper filter 1 than, in succession, grid 5, the magnet layer, the activated carbon elements layer and finally the paper filter 4 that could alternatively be made of fabric.

The outer shape of the filtering device could also be derived from other simple or elaborate geometrical designs, cone or truncated cone, cylinder, pyramid or truncated pyramid, prism etc. since the outer form is adaptable to that of the unit on which the filter is applied.

The outer box can be made of various materials: plastic, metal, paper, wood according to construction and application requirements.

The filtering device shall be fitted either in one of the air ducts or in the fume gathering hood or in an aperture suitably made in the box.

An assembly seat shall be provided so that the box shall be adequately fitted by means of fasteners like screws, elastic joints and other types of fixing that ensure easy change of filter.

The extractor device can also be fitted with a liquid suction unit suitable for generating air flows that move from within the hood towards the outside, in order to extract polluting or unwanted substances.

Filtering units single or coupled with more filtering elements shall be fitted upstream or downstream the extractor.

An aeration grid can be fitted on the hood causing the extractor to draw external air, in sufficient quantity to maintain inside the hood a pressure slightly lower than outside. Holes to allow passage of power and connection cables can be provided. The hood can be suitably designed in order to allow easy access to the appliances or computer peripherals that it covers as well as to all parts of the extractor that undergo maintenance.

The filtering unit of the present invention is a very effective implement that removes many types of polluting particles produced by office equipment while in operation. It can be coupled with other types of filters that are particularly effective in trapping other unwanted elements present in office areas where machinery is normally operating.

The filtering device is used on implements that serve to convey and filter all emissions of hazardous substances produced by the cited office machines while operating.

## Claims

1. Air filtering unit for office equipment that releases polluting agents, comprising:
- a first filtering layer containing a first paper filter (1)
- a second filtering layer (2) incorporating magnets (3)
- a third filtering layer incarporating activated carbon and ferrite elements (7)

2. Filtering unit according to claim 1, wherein a fourth filtering layer is provided incorporating a second paper or fabric filter (4),

3. Filtering unit according to claim 1 wherein the paper filter has graduation h13 or h14.

4. Filtering unit according to claim 1 wherein the first filter paper (1) accordion like pleated.

5. filtering unit according to claim 1 wherein the magnets (3) are made of neodymlum.

6. Filtering unit according to claim 1 comprising a container (11) that encases it.

## Patentansprüche

1. Luftfiltereinheit für Bürogeräte, die Schadstoffe freisetzen, wobei die Luftfiltereinheit umfasst:
- eine erste Filterschicht, die einen ersten Papierfilter (1) enthält,
- eine zweite Filterschicht (2), die Magnete (3) einschließt,
- eine dritte Filterschicht, die Aktivkohle und Ferritelemente (7) einschließt.

2. Filtereinheit gemäß Anspruch 1, bei der eine vierte Filterschicht bereitgestellt ist, die einen zweiten Papier- oder Stofffilter (4) einschließt.

3. Filtereinheit gemäß Anspruch 1, bei der der Papierfilter einen Grad h13 oder h14 aufweist.

4. Filtereinheit gemäß Anspruch 1, bei der das erste Filterpapier (1) ziehharmonikaartig gefaltet ist.

5. Filtereinheit gemäß Anspruch 1, bei der die Magnete (3) aus Neodym hergestellt sind.

6. Filtereinheit gemäß Anspruch 1, die einen Behälter (11) umfasst, der sie umschließt.

## Revendications

1. Unité de filtration d'air pour du matériel de bureau qui libère des agents polluants, comportant :
- une première couche filtrante contenant un premier filtre en papier (1)
- une deuxième couche filtrante (2) incorporant des aimants (3)
une troisième couche filtrante incorporant du charbon actif et des éléments en ferrite (7).

2. Unité de filtration selon la revendication 1, dans laquelle est agencée une quatrième couche filtrante incorporant un second filtre en papier ou en tissu (4).

3. Unité de filtration selon la revendication 1, dans laquelle le filtre en papier a une graduation h13 ou h14.

4. Unité de filtration selon la revendication 1, dans laquelle le premier filtre en papier (1) est plié en accordéon.

5. Unité de filtration selon la revendication 1, dans laquelle les aimants (3) sont constitués de néodyme.

6. Unité de filtration selon la revendication 1, comportant un conteneur (11) qui l'entoure.
